# EUROPÄISCHE PATENTSCHRIFT

(11) **EP 0 512 441 B1**
(45) Veröffentlichungstag und Bekanntmachung des Hinweises auf die Patenterteilung: **09.08.1995**
(21) Anmeldenummer: 92107473.8
(22) Anmeldetag: 02.05.1992
(51) Int. Cl.: B60R 1/06

(54) **Vorrichtung zum Verstellen eines Bauteils**
Device for adjusting a component
Dispositif pour déplacer un élément de construction

(30) Priorität: 10.05.1991 DE 9105830 U
(43) Veröffentlichungstag der Anmeldung: 11.11.1992
(73) Patentinhaber: ROBERT BOSCH GMBH, 70442 Stuttgart (DE)
(72) Erfinder: Fornoff, Dieter, Dipl.-Ing, W-7500 Karlsruhe (DE); Dilger, Werner, W-7580 Bühl-Weitenung (DE); Dreier, Friedrich-Wilhelm, Dipl.-Ing., W-7580 Bühl (DE)

(56) Entgegenhaltungen:
- DE-A- 3 323 923
- FR-A- 2 554 066

## Beschreibung

### Stand der Technik

Die Erfindung geht aus von einer Vorrichtung nach dem Oberbegriff des Anspruchs 1. Im Handel sind derartige Vorrichtungen zum Verstellen eines Rückspiegels eines Kraftfahrzeugs bekannt, die ein Gehäuse und ein dieses Gehäuse verschließenden Gehäusedeckel aufweisen (siehe zur Beispiel das Dokument DE-A-3 323 923). Zwischen dem Gehäuse und dem Deckel befindet sich eine erste Dichtung. Ein zweites Dichtungselement ist in dem Deckel verankert und erstreckt sich bis zu dem aus dem Gehäuse herausragenden verstellbaren Glied. Der Verwendungszweck solcher Spiegelantriebe erfordert eine zuverlässige Abdichtung gegen Eindringen von Nässe und Schmutz. Die Wahrscheinlichkeit einer Leckage ist um so höher, je mehr Dichtflächen vorhanden sind. Außerdem steigt mit der Zahl der Dichtelemente der Montageaufwand erheblich.

### Vorteile der Erfindung

Die erfindungsgemäße Vorrichtung mit den kennzeichnenden Merkmalen des Anspruchs 1 hat demgegenüber den Vorteil, daß die Anzahl der Dichtstellen verringert wird, die Montage vereinfacht wird und eine Vormontage von Dichtung und Gehäusedeckel ermöglicht wird.

Durch die in den abhängigen Ansprüchen aufgeführten Maßnahmen sind vorteilhafte Weiterbildungen und Verbesserungen der im Anspruch 1 angegebenen Vorrichtung möglich. Besonders vorteilhaft ist es, wenn die einstückige Dichtung aus einem zwischen den Gehäuseteilen verlaufenden Rand und mindestens einem flexiblen, an das bewegliche Glied anknüpfbaren Rollbalg besteht. Wenn die Dichtung innerhalb des Randes gegebenenfalls bis auf die Durchbrüche an den Rollbälgen ganzflächig geschlossen ist, so hat dies den Vorteil, daß zwischen die Dichtung und den Deckel eindringende Feuchtigkeit keinen Einfluß auf die Betriebssicherheit des Antriebs hat. An die Dichtung angeformte Anknüpfwarzen ermöglichen eine leichte und schnelle Fixierung der Dichtung am Gehäusedeckel.

### Zeichnung

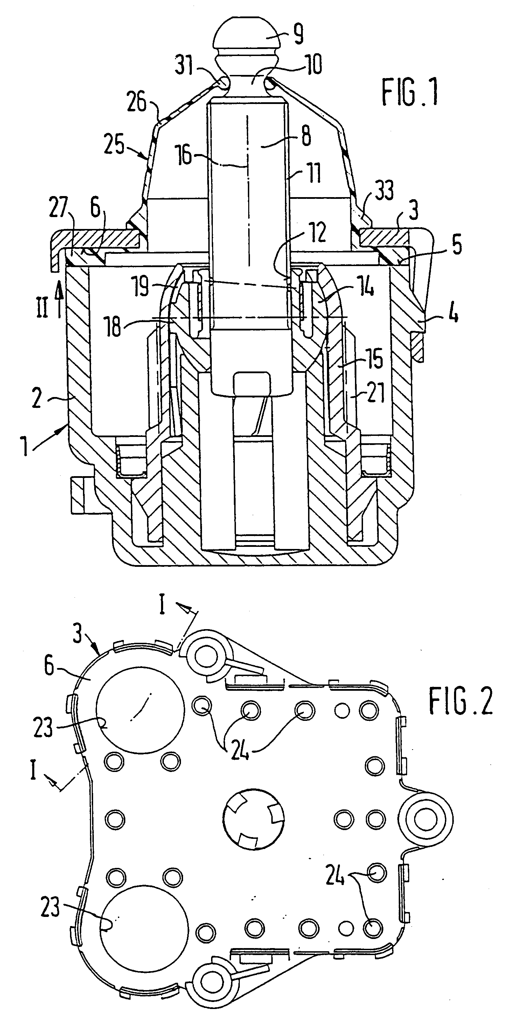

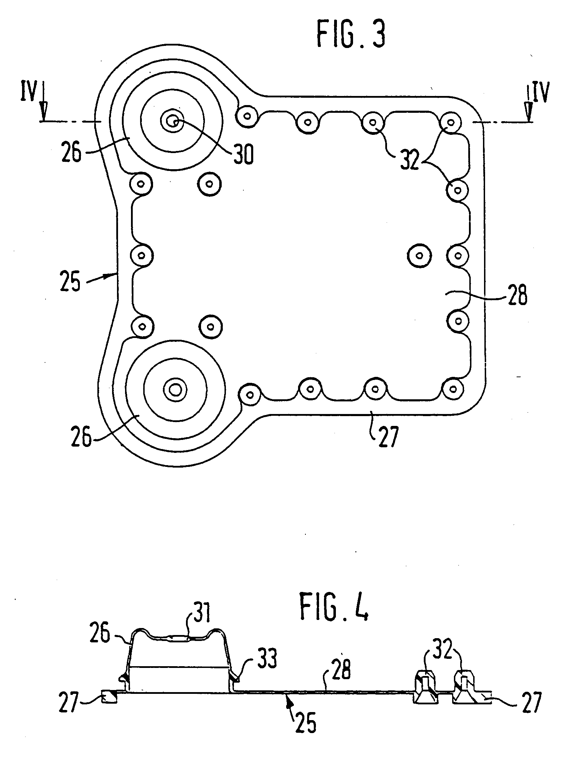

Ein Ausführungsbeispiel der Erfindung ist in der Zeichnung dargestellt und in der nachfolgenden Beschreibung näher erläutert. Figur 1 zeigt einen Querschnitt der erfindungsgemäßen Vorrichtung gemäß Linie I-I in Figur 2. Figur 2 zeigt einen Gehäusedeckel in einer Ansicht gemäß Richtung II in Figur 1. Figur 3 zeigt die Ansicht einer Dichtung und Figur 4 einen Querschnitt durch die Dichtung gemäß Linie IV-IV in Figur 3.

### Beschreibung des Ausführungsbeispiels

Ein insgesamt mit 1 bezeichnetes Gehäuse besteht aus einem Grundkörper 2 und einem Gehäusedeckel 3. Der Grundkörper 2 weist Rastnasen 4 zum Aufklipsen des Deckels 3 auf. Der Grundkörper 2 ist im übrigen topfförmig ringsum geschlossen und nur nach oben gegenüber dem Deckel 3 unter Bildung einer ebenen Dichtfläche 5 offen. Der Deckel 3 weist eine der Dichtfläche 5 gegenüberliegende ebenfalls ebene Dichtfläche 6 auf.

Aus dem Gehäuse 1 ragen als verstellbares Glied eine oder mehrere Spindeln 8 hervor, die am Ende jeweils einen Kugelkopf 9 tragen. An den Kugelkopf schließt sich eine ausgerundete Einschnürung 10 an. Der Kugelkopf 9 ist mit einem nicht gezeigten plattenförmigen Bauteil verbunden, das als Spiegelträger verstellt werden soll. Die Spindel 8 ist entlang einem Gewinde 11 gegenüber einem ebenfalls ein Gewinde 12 tragenden Gegenstück 14 verstellbar. Das Gegenstück 14 ist in einem im Gehäuse 1 angeordneten Lagerelement 15 kugelig gelagert. Zur Übertragung eines Drehmoments von dem Lagerelement 15 auf das Gegenstück 14 trägt dieses Mitnehmer 18, die in etwa parallel zur Achse 16 verlaufende Schlitze 19 des Lagerelements 15 eingreifen. Das Lagerelement 15 trägt an seinem Umfang eine Verzahnung 21 und bildet damit ein Zahnrad, das beispielsweise von einer nicht gezeigten Schneckenwelle antreibbar ist. Im übrigen entspricht die Bauweise und Funktion der Vorrichtung genau der am gleichen Tag eingereichten, in Figur 1 zeichnungsgleichen Anmeldung "Einrichtung zum Verstellen einer Spindel" mit dem Aktenzeichen G 91 05829 (& EP-A-0 512 440).

Der Gehäusedeckel 3 enthält wie aus Figur 2 ersichtlich ist, zwei Öffnungen 23, durch die die Spindeln 8 hindurchtreten können. Um die Öffnungen 23 herum verläuft am Deckelrand die Dichtfläche 6. Neben der Dichtfläche 6 und den Öffnungen 23 sind Bohrungen 24 zur Befestigung einer einstückigen Dichtung 25 angebracht. Die Dichtung 25 ist aufgebaut aus - im Ausführungsbeispiel zwei - flexiblen Dichtelementen 26, die als Rollbalg ausgeformt sind sowie einem die Gehäuseteile 2 und 3 gegeneinander abdichtenden Dichtelement 27, das als verdickter Rand ausgebildet ist. Die Dichtelemente 26 und 27 sind durch ein flächiges Mittelstück 28 zu einer geschlossenen Fläche verbunden. Die Fläche wird lediglich unterbrochen durch jeweils in der Mitte der Rollbälge angeordnete Durchbrüche 30, um die herum jeweils ein verdickter Kragen 31 zur Anlage an die Einschnürung 10 der Spindel 8 angeordnet ist. Entlang des Randes 27 sind an dem Mittelstück 28 zum Gehäusedeckel 3 hin hervorstehende Anknüpfwarzen 32 angeordnet. Diese sind vorzugsweise mit zentralen Sacklöchern ausgestattet, um das Eindrücken in die Bohrungen 24 des Deckels 3 zu erleichtern. Ebenfalls der Fixierung der Dichtung 25 an dem Gehäusedeckel 3 dienen Kragen 33, über die die Öffnungen 23 des Deckels gestülpt werden und die diesen hinterher in der Weise überdecken, daß beide Teile auch axial fixiert sind.

Die Montage der erfindungsgemäßen Verstellvorrichtung ist dadurch sehr vereinfacht, daß nur noch eine einzige Dichtung 25 benötigt wird. Diese wird vor der Montage des Gehäusedeckels 3 auf den Grundkörper 2 an den Gehäusedeckel 3 angeknüpft. Dazu dienen die beschriebenen Anknüpfwarzen 32 und die Kragen 33. Beim Aufsetzen des Gehäusedeckels 3 werden dann lediglich noch die Kragen 31 über die Kugelköpfe 9 der Spindel 8 gestreift, bis sie an den Einschnürungen 10 eng anliegen. Der Deckel 3 ist auf die Rastnasen 4 des Grundkörpers aufrastbar, kann aber auch durch Schrauben oder andere Befestigungsmittel verbunden werden.

## Patentansprüche

1. Vorrichtung zum Verstellen eines Glieds (8), insbesondere einer Spindel (8) zur Verstellung eines Spiegelträgers für einen Rückspiegel eines Kraftfahrzeugs, mit einem mindestens zweiteiligen Gehäuse (1), bestehend aus einem Grundkörper (2) und einem Gehäusedeckel (3) sowie mindestens einem aus dem Gehäuse (1) herausragenden verstellbaren Glied (8), das gegenüber dem Gehäuse (1) durch ein flexibles Dichtelement (26) abgedichtet ist und mit einem zweiten, die Gehäuseteile (2, 3) gegeneinander abdichtenden Dichtelement (27), dadurch gekennzeichnet, daß die beiden Dichtelemente (26, 27) miteinander verbunden und zu einer einstückigen Dichtung (25) zusammengefaßt sind.

2. Vorrichtung nach Anspruch 1, dadurch gekennzeichnet, daß die Dichtung einen umlaufenden, zwischen den Gehäuseteilen (2, 3) verlaufenden Rand (27) und mindestens einen flexiblen, an das bewegliche Glied anknüpfbaren Rollbalg (26) aufweist.

3. Vorrichtung nach einem der vorhergehenden Ansprüche 1 oder 2, dadurch gekennzeichnet, daß die Dichtung (25) vor der Gesamtmontage der Vorrichtung an den Gehäusedeckel (3) anmontierbar ist.

4. Vorrichtung nach einem der vorhergehenden Ansprüche, dadurch gekennzeichnet, daß die Dichtung (25) Anknüpfwarzen (32) zur Fixierung am Gehäuse (1), insbesondere am Gehäusedeckel (3) aufweist.

5. Vorrichtung nach einem der vorhergehenden Ansprüche, dadurch gekennzeichnet, daß an dem Gehäuse (1) Bohrungen (24) zum Eindrücken der Anknüpfwarzen (32) angeordnet sind.

6. Vorrichtung nach einem der vorhergehenden Ansprüche, dadurch gekennzeichnet, daß der Rand (27) der Dichtung (25) verdickt ist.

7. Vorrichtung nach einem der vorhergehenden Ansprüche, dadurch gekennzeichnet, daß die Dichtung (25) innerhalb des Randes (27) gegebenenfalls bis auf Durchbrüche (30) an den Rollbälgen (26) zum Einknüpfen der Glieder (8) ganzflächig geschlossen ist.

8. Vorrichtung nach einem der vorhergehenden Ansprüche, dadurch gekennzeichnet, daß zwei Glieder (8) zum Verschwenken des plattenförmigen, inbesondere den Rückspiegel tragenden, Bauteils in zwei Ebenen angeordnet sind.

9. Vorrichtung nach einem der vorhergehenden Ansprüche, dadurch gekennzeichnet, daß die Glieder (8) mittels Gewinden (11, 12) axial verstellbar sind, sodaß ihre aus dem Gehäuse (2) herausragende Länge veränderlich ist.

## Claims

1. Device for adjusting a member (8), in particular a spindle (8) for adjusting a mirror carrier for a rearview mirror of a motor vehicle, having an at least two-part housing (1), comprising a basic body (2) and a housing cover (3), and having at least one adjustable member (8) which projects out of the housing (1) and is sealed with respect to the housing (1) by a flexible sealing element (26), and having a second sealing element (27) which seals the housing parts (2, 3) with respect to one another, characterized in that the two sealing elements (26, 27) are connected to one another and are combined to form a single-piece seal (25).

2. Device according to Claim 1, characterized in that the seal exhibits a peripheral border (27) running between the housing parts (2, 3), and at least one flexible U-type bellows (26) which can be clipped on to the movable member.

3. Device according to one of the preceding Claims 1 or 2, characterized in that the seal (25) can be mounted on the housing cover (3) before overall mounting of the device.

4. Device according to one of the preceding claims, characterized in that the seal (25) exhibits clip-on protuberances (32) for fixing on the housing (1), in particular on the housing cover (3).

5. Device according to one of the preceding claims, characterized in that bores (24) for the pressing-in of the clip-on protuberances (32) are arranged on the housing (1).

6. Device according to one of the preceding claims, characterized in that the border (27) of the seal (25) is thickened.

7. Device according to one of the preceding claims, characterized in that the seal (25), within the border (27), is continuous over the entire surface area, if appropriate, apart from through-passages (30) on the U-type bellows (26) for the clipping-in of the members (8).

8. Device according to one of the preceding claims, characterized in that two members (8) for pivoting the plate-like component which bears, in particular, the rearview mirror are arranged in two planes.

9. Device according to one of the preceding claims, characterized in that the members (8) can be adjusted axially by means of threads (11, 12), with the result that their length projecting out of the housing (2) can be changed.

## Revendications

1. Dispositif pour déplacer un organe (8), en particulier une broche (8) servant à déplacer un support de miroir pour un rétroviseur d'un véhicule à moteur, avec un boîtier (1) qui est au moins en deux parties, et comprend un corps de base (2) et un couvercle de boîtier (3) ainsi qu'au moins un organe (8) qui peut être déplacé et qui fait saillie à partir de boîtier (1), dont l'étanchéité est assurée par rapport au boîtier (1) par un élément d'étanchéité flexible (25), et avec un deuxième élément d'étanchéité (27) assurant l'étanchéité des parties de boîtier (2, 3) l'une par rapport à l'autre, dispositif caractérisé en ce que les deux éléments d'étanchéité (26, 27) sont reliés ensemble et sont réunis pour former un joint d'étanchéité d'une seule pièce (25).

2. Dispositif selon la revendication 1, caractérisé en ce que le joint d'étanchéité présente un bord (27) qui en fait tout le tour et s'étend entre les parties de boîtier (2, 3), et au moins un soufflet flexible (26) qui peut être accroché sur l'organe mobile.

3. Dispositif selon l'une des revendications précédentes 1 ou 2, caractérisé en ce que le joint d'étanchéité (25) peut être monté, avant le montage global du dispositif, sur le couvercle de boîtier (3).

4. Dispositif selon l'une des revendications précédentes, caractérisé en ce que le joint d'étanchéité (25) présente des boutons d'accrochage (32) servant à fixer le joint sur le boîtier (1), en particulier sur le couvercle de boîtier (3).

5. Dispositif selon l'une des revendications précédentes, caractérisé en ce que l'on dispose sur le boîtier (1) des perçages (24) pour enfoncer les boutons d'accrochage (32).

6. Dispositif selon l'une des revendications précédentes, caractérisé en ce que le bord (27) du joint d'étanchéité (25) a une épaisseur renforcée.

7. Dispositif selon l'une des revendications précédentes, caractérisé en ce que le joint d'étanchéité (25) est enfermé tout à fait à plat à l'intérieur du bord (27), le cas échéant jusqu'à des interruptions (30), sur les soufflets (26) pour accrocher les organes (8).

8. Dispositif selon l'une des revendications précédentes, caractérisé en ce que deux organes (8) sont disposés dans deux plans pour faire pivoter l'élément de construction en forme de plaque, portant en particulier le rétroviseur.

9. Dispositif selon l'une des revendications précédentes, caractérisé en ce que les organes (8) peuvent être déplacés axialement au moyen de filetages (11, 12) de telle sorte que leur longueur en saillie hors de boîtier (2) soit variable.
